# EUROPEAN PATENT SPECIFICATION

(11) **EP 2 492 602 B1**
(45) Date of publication and mention of the grant of the patent: **23.07.2014**
(21) Application number: 12156615.2
(22) Date of filing: 23.02.2012
(51) Int. Cl.: F24D 19/10, F24H 9/20

(54) **Apparatus and method to optimize the functioning of a boiler to heat water**
Vorrichtung und Verfahren zur Optimierung der Funktion eines Kessels zum Erhitzen von Wasser
Appareil et procédé pour optimiser le fonctionnement d'une chaudière pour chauffer l'eau

(30) Priority: 23.02.2011 IT UD20110024
(43) Date of publication of application: 29.08.2012
(73) Proprietor: PALAZZETTI LELIO SPA, I-33080 Porcia (PN) (IT)
(72) Inventor: Palazzetti, Ruben, 33080 Porcia (PN) (IT)
(74) Representative: Petraz, Gilberto Luigi

(56) References cited:
- EP-A2- 0 816 766
- DE-A1- 3 838 477
- DE-A1- 19 956 222
- DE-A1-102006 009 047
- DE-C1- 19 710 905

## Description

### FIELD OF THE INVENTION

The present invention concerns an apparatus and a method to optimize the functioning of a boiler, or heat generator, particularly of the solid biomass fuel type, such as pellets or suchlike or similar to pellets, chip or similar solid biomass fuel in the form of particulate, granules or similar, to heat water for a user machine, such as a heating plant of the domestic type, a tank to accumulate water, or other.

### BACKGROUND OF THE INVENTION

An apparatus to regulate a boiler using solid biomass fuel, such as pellets or suchlike or similar to pellets, chip or similar solid biomass fuel in the form of particulate, granules or similar, to heat water, which comprises a pump to circulate the water, a three-way valve, a device to regulate the thermal power of the boiler, a temperature sensor at exit from the boiler, and an electronic control unit connected to the temperature sensor.

In general it must first be considered that boilers using solid biomass fuel in question, unlike wood burners, gas burners or liquid fuel burners, have a very long transitory switch-on and switch-off time, in the range of half an hour; that is, they do not have an on/off behavior where the generation of heat, and hence the heating of the water, is almost instantaneous. On the contrary, they have long waiting times until they reach normal operating temperature conditions, and therefore, in said transitory times, the water heating is not optimal.

One disadvantage of such boilers using solid biomass fuel to heat water, connected to the long switch-on and switch-off times described above, is that if the water is too cold, condensation forms in the combustion chamber and the drops of condensation, together with the combustion fumes, cause unwanted compounds, such as creosote and tar, which are deposited on the walls of the heat exchanger.

Generally speaking, known boilers comprise a delivery pipe, which conveys the hot water toward the outside, and a return pipe, which returns the water back inside the boiler. The three-way valve is located on the return pipe and is connected, by means of a by-pass pipe, to the delivery pipe, in order to possibly mix a certain quantity of hot water with the return water. In this way the return water can be heated before returning inside the boiler. In order to perform this mixing, the valve is commanded by the electronic control unit when the temperature detected by the sensor goes below a determinate value. Alternatively, the system may be managed by a thermostatic member with a predefined and constant set point.

In this way, the pre-heated water entering into the boiler allows to keep the heat interchange wall between the water and the combustion fumes at a temperature such as to prevent the formation of condensation. Condensation, as we said, which mixing with the soot, would form creosote and tar that would cause the formation of incrustations and hence occlusions.

The pump, controlled by the electronic control unit, is only able to function in the so-called "on/off' mode, and therefore is switched on and works at maximum power, or is switched off. The alternation of these two time phases allows to vary the flow rate of the hot water sent to the user machine and consequently the heat load used thereby.

The known apparatus functions according to a method that provides to set a reference value of the water temperature, which must possibly be maintained at exit from the boiler and precisely in the delivery pipe. If the temperature value detected by the temperature sensor is less than the one set, the electronic control unit commands both the device to regulate the boiler so that the maximum thermal power is produced, and also commands the pump to switch on. If, on the contrary, the temperature value detected by the temperature sensor is more than or equal to the one set, the electronic control unit commands the boiler to turn itself down, or even to temporarily switch off.

One disadvantage of the known apparatus is the presence of the three-way valve, which increases the hydraulic load losses for which the pump has to compensate. Furthermore, the known apparatus does not guarantee that the water temperature at exit from the three-way valve and entering into the boiler is high enough to prevent the formation of condensation inside the boiler.

Another disadvantage is that the hydraulic pump with an on/off functioning increases the consumption of electric energy, since it cannot function, when switched on, at other operating conditions other than maximum. Consequently, the pump cannot convey water flow rates other than maximum.

Another disadvantage is that detecting only one temperature value does not allow to regulate the functioning of the boiler precisely, and it is therefore not very adaptable to the different types of user machines to which the boiler is associated. Indeed, with this type of management, no information is provided concerning what happens downstream of the hot water generator. The prior art documents DE-A-19956222, EP-A-0.816.766, DE-A-102006009047 and DE-C-19710905 are known, which generally describe known control apparatuses applicable to boilers for heating water associated with a user machine, the main purpose of which is to guarantee the heat requirements of the user machine and not to optimize the functioning of the heat generator itself.

In particular, DE-A-19956222 describes a known control apparatus which provides a by-pass valve to mix a part of heated water at exit from the delivery pipe with cold water entering the boiler from a return pipe, a temperature sensor associated with the delivery pipe, a temperature sensor associated with the return pipe and a temperature sensor of the outside environment. The known control apparatus uses the data detected by the sensors to command the switching on and off of the pump and the heater at specific intervals according to a predetermined algorithm.

EP-A-0.816.766, DE-A-102006009047 and DE-C-19710905 describe similar control apparatuses which provide a temperature sensor associated with the delivery pipe and a temperature sensor associated with the return pipe and able to transmit coordinated electric signals associated with the temperatures detected, according to which the functioning of the pump is commanded on each occasion so as to define a desired water flow rate.

One purpose of the present invention is to obtain an apparatus for the functioning of a boiler using solid biomass fuel, such as pellets or suchlike or similar to pellets, chip or similar solid biomass fuel in the form of particulate, granules or similar, which allows to prevent condensation inside the boiler in a simple and safer way, and to reduce the load losses for which the pump has to compensate.

Another purpose of the present invention is to obtain an apparatus that reduces electric consumption of the pump.

Another purpose of the present invention is to perfect a functioning method of the boiler that is accurate, precise and easily adaptable to different types of user machine.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, an apparatus according to the present invention can be used to optimize the functioning of a boiler or heat generator, suitable to heat water for a user machine and having a delivery pipe, a return pipe, and a heat exchanger comprising a heat interchange wall between the water to be heated and the combustion fumes.

The present invention is particularly advantageous to optimize the functioning of a boiler or heat generator using solid biomass fuel, such as pellets or suchlike or similar to pellets, chip or similar solid biomass fuel in the form of particulate or granules or suchlike.

The apparatus according to the present invention comprises pumping means suitable to make the water circulate in the boiler, between the return pipe and the delivery pipe, and a first temperature sensor to detect a first temperature of the water in the delivery pipe.

According to one feature of the present invention, a second temperature sensor is associated to the return pipe to detect a second temperature of the water in the return pipe, and adjustment means are associated to the pumping means, to selectively vary the flow rate of the pumping means depending on the temperature detected by at least one of either the first temperature sensor or the second temperature sensor.

According to the present invention, the adjustment means comprise an electronic control unit provided with a memory and associated to at least the first temperature sensor and to the second temperature sensor and power varying means in order to selectively vary the flow rates of the pumping means depending on at least the first and second temperature, detected by at least the first temperature sensor and the second temperature sensor.

According to the present invention, the electronic control unit is configured to compare the difference in the values of the first and second temperatures with a maximum temperature difference value between the first and the second temperature and with a minimum temperature difference value between the first and the second temperature: the maximum and minimum values are predetermined and memorized in the memory of the electronic control unit.

Moreover, according to the present invention, the electronic control unit is also configured to carry out a comparison of an actual average value of the values of the first and second temperatures with a first predetermined value, indicative of the start-up temperature of the pumping means, and with a second predetermined value indicative of the temperature of the interchange wall of the heat exchanger of the boiler, both memorized in the memory.

With the present invention it is therefore possible to easily and automatically vary the flow rate of the hot water exiting and therefore to vary, in particular, to slow down the flow of heat to the outside, in order to raise the temperature of the boiler, in particular of the interchange walls of the heat exchanger of the boiler, and therefore eliminate the undesirable phenomenon of condensation.

Moreover, with the present invention it is possible to make the boiler work in optimal heat exchange conditions, reducing electricity consumption, particularly deriving from the pumping means. According to the present invention the pumping means are controlled in their functioning to maintain optimal the heat difference represented by the maximum value of temperature difference between the first temperature and the second temperature.

According to another feature of the present invention, the electronic control unit is also associated to means to feed the solid fuel toward the combustion chamber of the boiler in order to regulate the thermal power delivered.

According to another inventive feature of the present invention, the method to optimize the functioning of a boiler suitable to heat water for a user machine comprises a first step in which a first temperature of the water in the delivery pipe is measured, and a second step in which a second temperature of the water in the return pipe is measured.

According to another feature of the present invention, the method also comprises a third step in which the flow rate of the pumping means is regulated depending on at least one of the two temperatures measured in the first and the second step.

According to another feature of the present invention, the third step of the method, carried out according to a first work program of an electronic control unit, comprises a first sub-step of comparing the difference of the values of the temperatures with a maximum temperature difference value and with a minimum temperature difference value predetermined and memorized in a memory of the electronic control unit connected to the pumping means.

Moreover, according to another feature of the present invention, the third step of the method also comprises a second sub-step of comparing an actual average value of the values of the temperatures with a first predetermined value, indicative of the start-up temperature of the pumping means, and with a second predetermined value indicative of the temperature of the interchange wall of the heat exchanger of the boiler, both memorized in the memory of the electronic control unit.

According to a variant, the method comprises a third sub-step in the third step, carried out according to a third work program of the electronic control unit, which compares the value of the first temperature with a third predetermined temperature value, memorized in the memory of the electronic control unit.

According to a further feature of the present invention, in the third step, the electronic control unit regulates the thermal power of the boiler acting on means to feed a solid fuel toward a combustion chamber of the boiler.

According to one feature of the present invention, in the third step, adjustment means vary the flow rate of the pumping means, in a linear manner between a minimum value and a maximum value.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a schematized perspective view of an apparatus according to the present invention;
- fig. 2 is a schematized view of the apparatus and boiler in fig. 1, connected to a first user machine;
- fig. 3 is a schematized view of the apparatus and boiler in fig. 1, connected to a second user machine;
- fig. 4 is a schematized view of the apparatus and boiler in fig. 1, connected to a third user machine;
- fig. 5 is a schematized view of the apparatus and boiler in fig. 1, connected to a fourth user machine.

To facilitate comprehension, the same reference numbers have been used, where possible, to identify identical common elements in the drawings. It is understood that elements and characteristics of one form of embodiment can conveniently be incorporated into other forms of embodiment without further clarifications.

### DETAILED DESCRIPTION OF SOME PREFERENTIAL FORMS OF EMBODIMENT

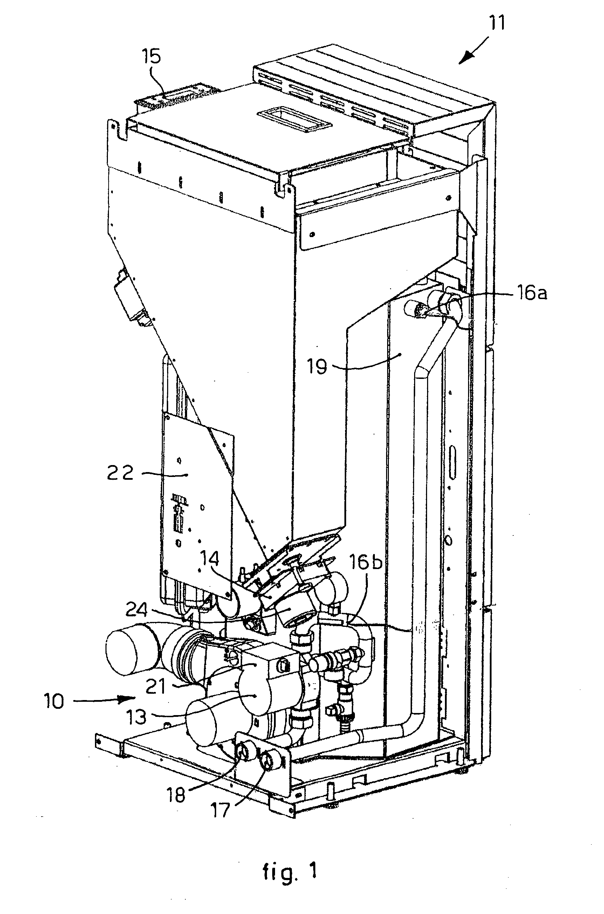

With reference to fig. 1, an apparatus 10 according to the present invention is shown installed in a boiler or heat generator 11 of a known type, in this case using solid biomass fuel, for example pellets or suchlike or similar to pellets, chip or similar solid biomass fuel in the form of particulate, granules or similar, suitable to heat hot water to be conveyed to a user machine 12, which can be for example a heating plant, a tank to accumulate water, or other.

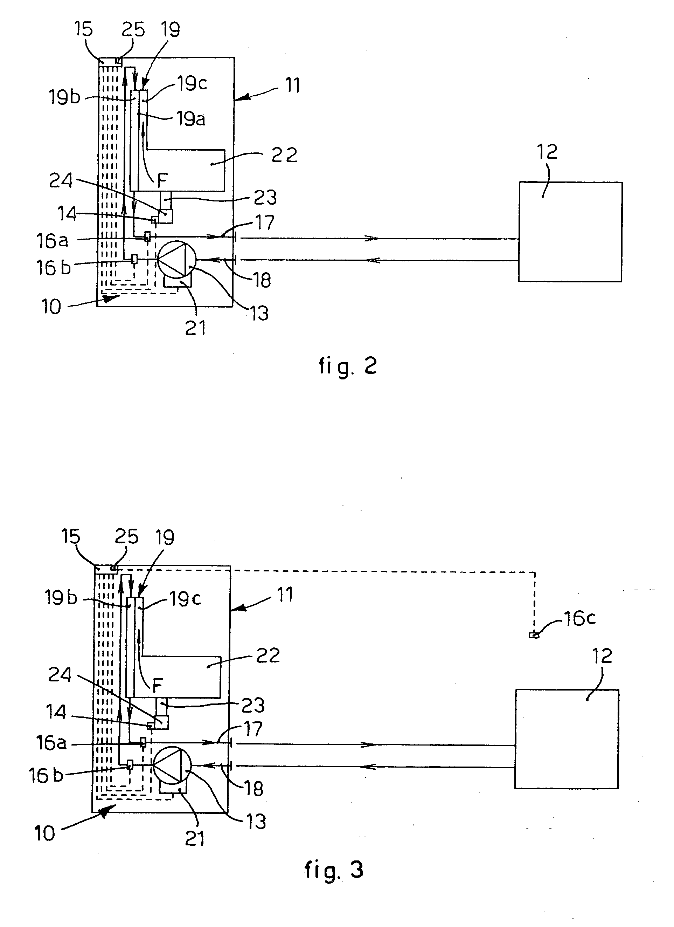

The apparatus 10 comprises a pump 13 (figs. 1 and 2), a device 14 to regulate the thermal power of the boiler 11, an electric power variator 21 of the pump 13, a first temperature sensor 16a, a second temperature sensor 16b and an electronic control unit 15 connected to them.

The boiler 11 comprises a combustion chamber 22, fed with solid fuel, in this case pellets, by means of an Archimedes screw 23 driven by an electric motor 24, controlled by the device 14 to regulate the thermal power. The boiler 11 also comprises a heat exchanger 19 having a heat interchange wall 19a between the water circulating in a first zone 19b and the fumes F, produced by combustion, circulating in a second zone 19c. The boiler 11 also comprises a delivery pipe 17 for the hot water and a return pipe 18 for the cold water, connected to the user machine 12.

The temperature sensor 16a is mounted on the delivery pipe 17 to detect a first temperature T1 of the water in the delivery pipe 17, while the second temperature sensor 16b is mounted on the return pipe 18 to detect a second temperature T2 of the water in the return pipe 18.

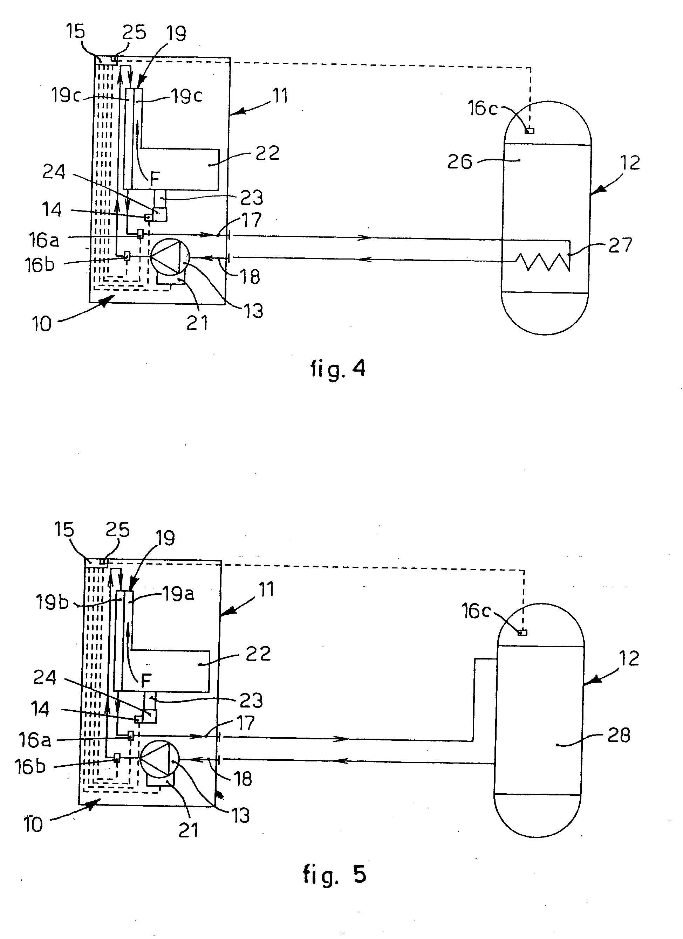

According to a variant, shown in figs. 3, 4 and 5, the apparatus 10 also comprises a third temperature sensor 16c, which is positioned near the user machine 12 (fig. 3), or inside it (figs. 4 and 5).

The disposition of the temperature sensors 16a and 16b allows to detect the water temperature both at inlet and at outlet of the boiler 11, so that it is also possible to estimate, with sufficient approximation, the value of the water temperature inside the boiler 1 l, which is substantially equal to the temperature of the interchange wall 19a of the heat exchanger 19.

The pump is disposed in series on the return pipe 18 and, by means of the power variator 21 connected to it, is able to vary the flow rate of the water from a minimum value (Qₘᵢₙ) to a maximum value (Qₘₐₓ), as will be described in more detail hereafter.

The sensors 16a, 16b and 16c are connected to the electronic control unit 15 which comprises a memory 25 and is programmed to control, in response to the signals from the sensors 16a, 16b and possibly 16c, both the electric power variator 21 of the pump 13, and also the device 14 which regulates the thermal power of the boiler 11, so as to satisfy the heat requirements of the user machine 12.

The apparatus 10 as described heretofore functions as follows.

In a first form of embodiment according to the present invention, when the user machine 12 consists of a hydraulic heating plant (fig. 2), the control unit 13 executes a first work program, memorized in its memory 25, both to optimize the functioning of the plant 12 and also to prevent condensation inside the boiler 11.

In this case the method provides that a first reference temperature P1 is set in the memory 25, to start up the pump 13, for example 30°C, and a second temperature P2 of the interchange walls 19a, for example 45°C.

When the boiler 11 is functioning, the control unit 15 continuously calculates the real value Tc of the temperature of the heat interchange walls 19a. The value Tc is an average weighted between a temperature value T1 of the water in the delivery pipe 17, detected by the first sensor 16a, and a temperature value T2 of the water in the return pipe 18, detected by the second sensor 16b.

If the Tc value calculated is equal to or less than value P2, there is a danger of condensation on the heat interchange walls 19a; in particular, if the Tc value calculated is also less than value P1, there is a risk of excessive cooling of the heat interchange walls 19a and hence of reducing the performance of the boiler 11.

In this case, in order to prevent the formation of condensation on the heat interchange walls 19a, the control unit 15, to control the temperature value Tc, keeps the boiler 11 in conditions of nominal power, which correspond to conditions of maximum efficiency, by means of the device 14 to regulate the thermal power. To do this, it acts on the pump 13 by means of the power variator 21, so that a greater delivery of cold water is conveyed to the boiler 11 when it is necessary to lower the temperature value Tc and a lower delivery when it is necessary to increase the temperature value Tc.

In particular, in this case the following three conditions may arise, which have corresponding actions of the electronic control unit 15:
a1) if Tc<P1, the pump functions at minimum flow rate Qₘᵢₙ.
b1) if Tc=P2, the pump functions at maximum flow rate Qₘₐₓ.
c1) if P1<Tc<P2, the pump functions and modulates the flow rate linearly between the minimum flow rate Qₘᵢₙ and the maximum flow rate Qₘₐₓ.

On the contrary, if Tc is greater than P2, there is no danger of condensation in the heat exchanger 19, and therefore in a second mode of the method, able to ensure an efficient and accurate functioning of the boiler 11, the control unit 15 compares the difference in temperature, called ΔT, between the temperature values T1, detected by the first sensor 16a, and T2, detected by the second sensor 16b, with two reference values memorized in the memory 25 and called ΔTₘₐₓ and ΔTₘᵢₙ. In particular ΔTₘₐₓ refers to the maximum value of ΔT acceptable, for example 8°C, whereas ΔTₘᵢₙ refers to the minimum value of ΔT, for example 3°C. In this other case the control unit 15 is set to keep the value of ΔT as near as possible to the optimum value of heat exchange ΔTₘₐₓ, and in any case to keep this value greater than ΔTₘᵢₙ so as to prevent the water from passing inside the boiler 11 without acquiring the maximum possible quantity of heat. In order to do this, the control unit 15 acts on the pump 13 by means of the power variator 21, so that a greater quantity of cold water is conveyed, if the ΔT value detected is near to or greater than the value of ΔTₘₐₓ, and a smaller quantity of cold water if the ΔT value detected is near to or less than the value ΔTₘᵢₙ. The thermal power of the boiler 11 is instead kept at the nominal value by means of the device 14 to regulate the thermal power.

In this other case the following other three conditions may arise, which have corresponding actions of the control unit 15:
d1) if ΔT <ΔTₘᵢₙ, the pump functions at minimum flow rate Qₘᵢₙ.
e1) if ΔT >ΔTₘₐₓ, the pump functions at maximum flow rate Qₘₐₓ.
f1) if ΔTₘᵢₙ<ΔT<ΔTₘₐₓ, the pump functions and modulates the flow rate linearly between the minimum flow rate Qₘᵢₙ. and the maximum flow rate Qₘₐₓ.

This method ensures an efficient functioning of the boiler 11, which thus minimizes the heat consumption of the pump 13, so as to minimize the electric consumption of the corresponding motor and to respond quickly to the requirements of the user machine 12.

In a second form of embodiment of the present invention, shown schematically in fig. 3, there is the third temperature sensor 16c in the environment heated by the heating plant 12. In this configuration the control unit 15 executes a second work program memorized in the memory 25.

In this case, the method provides that a temperature T_{A} is set, to be maintained in the environment heated by the user machine 12, the actual value T3 of which is measured by the third temperature sensor 16c. In the memory a hysteresis temperature value I_{A} is also memorized, relating to T_{A}, and a temperature value Tw, relating to the temperature of the water exiting from the boiler 11, the actual value T1 of which is measured by the first temperature sensor 16a. The control unit 15 acts on the pump 13, in the same way as described above for the first work program and on the boiler 11, by means of the device 14 to regulate the thermal power, so as to make the boiler 11 function in conditions of maximum power, or respectively minimum power, if T3 is lower than the difference between T_{A} and I_{A} or respectively above T_{A}. The boiler 11 is instead made to function in power modulation if the value of T3 is comprised between T_{A} and the difference between T_{A} and I_{A}.

In particular, the following five conditions may arise, which have corresponding actions of the electronic control unit 15:
a2) if T3<(T_{A} _ I_{A}), the boiler 11 functions at maximum power.
b2) if T3=T_{A}, the boiler 11 functions at minimum power.
c3) if T3>T_{A}, the boiler 11 is switched off.
d3) if (T_{A}- I_{A})<T3 <T_{A} and T1 <Tw, the boiler 11 functions at maximum power.
e3) if (T_{A}-I_{A})<T3<T_{A} and T1>Tw,the boiler 11 modulates the power to keep T1 = Tw.

This functioning method reduces heat consumption of the boiler 11 and ensures a prompt and efficient response to the requirements of the user machine 12 and guarantees optimized electric consumption of the pump 13.

In a third form of embodiment of the present invention, shown schematically in fig. 4, when the user machine 12 consists of a tank 26 to accumulate hot water and it is provided that the latter is heated by an internal coil 27, and that the third temperature sensor 16c is located inside the tank 26, the control unit 15 is programmed to execute a third work program memorized in its memory 25. In this case, the method provides that the following are memorized in the memory 25: a temperature value T_{ACC} to be maintained in the tank 26, the actual value T3 of which is measured by the third temperature sensor 16c; a hysteresis temperature value I_{ACC}, relating to T_{ACC;} a temperature value Tw, relating to the temperature of the water exiting from the boiler 11, the actual value T1 of which is measured by the first temperature sensor 16a. The control unit 15, by means of the device 14 to regulate the thermal power, keeps the boiler 11 at its maximum power, so that temperature T3 is as equal as possible to the value T_{ACC,} and switches it off when temperature T3 is greater than temperature T_{ACC}. Furthermore, in order to eliminate the danger of condensation, the control unit 15 acts on the pump 13, by means of the power variator 21, as described in the first case of the first work program (Tc≤P2). On the contrary, if Tc>P2, the control unit 15 acts on the pump 13 so as to keep the water temperature value T1 equal to the reference value Tw. In particular, if T1 is less than Tw, the control unit 15 will reduce the flow rate of the pump 13 to convey less cold water to the boiler 11; on the contrary, if T1 is greater than Tw, the control unit 15 increases the flow rate of the pump 13, to convey more cold water to the boiler 11. In particular the following three work conditions may arise, corresponding to three conditions of the electronic control unit:
a3) if T3<(T_{ACC}-I_{ACC}) and (T_{ACC}-I_{ACC})<T3<T_{ACC}, the boiler 11 functions at maximum power and the pump 13 modulates the flow rate to keep T1 equal to Tw.
b3) if T3>T_{ACC,} the boiler 11 is switched off and the pump modulates the flow rate to keep T1 equal to Tw.
c3) if T3>T_{ACC} and T1<T2+1, the boiler 11 is switched off.

This method allows to optimize consumption of the boiler 11 and to respond promptly to the requirements of the user machine 12 by means of the pump 13.

In a fourth form of embodiment of the present invention, shown schematically in fig. 5, when the user machine 12 consists of a tank 28 to accumulate hot water directly arriving from the boiler 11 and the third temperature sensor 16c is located inside the tank 28, the control unit 15 is programmed to execute a fourth work program memorized in the memory 25.

In this case, the method is similar to the one executed by the third work program of the control unit 15 previously described. In fact, by means of the device 14 that regulates the thermal power, the control unit 15 makes the boiler 11 function at its maximum power until the temperature value T3, measured by the third sensor 16c, is less than or equal to the temperature value T_{ACC,} as happened in the third work program. It switches it off when the temperature value T2 is greater than or equal to the reference temperature value T_{ACC,} and not when the temperature value T3 is greater than the value T_{ACC.}

This way of making the boiler 11 function is due to the fact that the water in the tank 28 is hotter in the upper part, where the sensor 16c is positioned, and is colder in the lower part from which the water entering into the boiler 11 exits, and the temperature T2 of which is detected by the second temperature sensor 16b. In this way the control unit 15 switches on the boiler 11 when the temperature T3 detected by the third sensor 16c is lower than the reference value T_{ACC,} and switches it off when the temperature T2 detected by the second temperature sensor 16b is equal to or greater than the reference value T_{ACC}. In this way it is guaranteed that the water contained in the tank 28 remains above the reference temperature T_{ACC},

In particular, the following three work conditions may arise, corresponding to three conditions of the control unit 15:
a4) if T3<(TA_{CC} - I_{ACC}) and (T_{ACC} - I_{ACC})<T3<T_{ACC}, the boiler 11 functions at its maximum power and the pump 13 modulates the flow rate to keep T1 equal to Tw.
b4) if T2> T_{ACC,} the boiler 11 is switched off and the pump 13 modulates the flow rate to keep T1 equal to Tw.
c4) if T2>T_{ACC} and T1<T2+1, both the boiler 11 and the pump 13 are switched off.

It is clear that modifications and/or additions of parts may be made to the apparatus 10 and the methods to optimize the functioning of a boiler as described heretofore, without departing from the scope of the appended claims.

It is also clear that, although the present invention has been described with reference to some specific examples, a person of skill in the art shall certainly be able to achieve many other equivalent forms of apparatus and/or methods to optimize the functioning of a boiler , having the characteristics as set forth in the claims and hence all coming within the field of protection defined thereby.

## Claims

1. Apparatus for optimizing the functioning of a boiler (11) suitable to heat water for a user machine (12) and having a delivery pipe (17), a return pipe (18), and a heat exchanger (19) comprising a heat interchange wall (19a) between the water to be heated and the combustion fumes, wherein said apparatus comprises pumping means (13) suitable to make said water circulate in said boiler (11), between said return pipe (18) and said delivery pipe (17), at least a first temperature sensor (16a) for detecting a first temperature (T1) of the water in said delivery pipe (17), a second temperature sensor (16b) associated to said return pipe (18) for detecting a second temperature (T2) of the water in said return pipe (18) and adjustment means (15, 21) associated to said pumping means (13), to selectively vary the flow rate of said pumping means (13) depending on the temperature detected by at least one of either said first temperature sensor (16a) or said second temperature sensor (16b) **characterized in that** said adjustment means comprise an electronic control unit (15) provided with a memory (25) and associated at least to said first temperature sensor (16a) and to said second temperature sensor (16b) and power varying means (21) in order to selectively vary the flow rates of said pumping means (13) depending on at least said first and second temperature (T1, T2), detected by at least said first temperature sensor (16a) and said second temperature sensor (16b), said electronic control unit (15) being configured to compare the difference (ΔT) of the values of said first and second temperatures (T1, T2) with a maximum temperature difference value (ΔTₘₐₓ) and with a minimum temperature difference value (ΔTₘᵢₙ) predetermined and memorized in said memory (25) of said electronic control unit (15), and to also carry out a comparison of an actual average value (Tc) of the values of said first and second temperatures (T1, T2) with a first predetermined value (P1) at which to start up the pumping means (13) and with a second predetermined value (P2) indicative of the temperature of the interchange wall (19a) of said heat exchanger (19) of the boiler (11), both memorized in said memory (25).

2. Apparatus as in claim 1, **characterized in that** it also comprises a third temperature sensor (16c) associated to said user machine (12).

3. Apparatus as in claim 2, **characterized in that** said electronic control unit (15) is also associated to said third temperature sensor (16c) in order to selectively vary the flow rates of said pumping means (13) depending on at least two temperatures detected by at least two of either said first, second or third temperature sensors (16a, 16b, 16c).

4. Apparatus as in any claim hereinbefore, **characterized in that** said pumping mean (13) is positioned on said return pipe (18), before said second temperature sensor (16) according to the direction of flow of the water.

5. Apparatus as in claim 3, **characterized in that** said electronic control unit (15) is also suitable to control feed means (23, 24) suitable to selectively feed a solid fuel toward a combustion chamber (22) of said boiler (11) in order to adjust the thermal power of said boiler (11).

6. Method for optimizing the functioning of a boiler (11) suitable to heat water for a user machine (12) and having a delivery pipe (17) and a return pipe (18), comprising a first step in which a first temperature (T1) of the water in said delivery pipe (17) is measured, comprising a second step in which a second temperature (T2) of the water in said return pipe (18) is measured and a third step of adjusting the flow rate of pumping means (13) suitable to make said water in said boiler (11) circulate, between said return pipe (18) and said delivery pipe (17), depending on at least one of said two temperatures (T1, T2) measured in said first and said second step, **characterized in that** said third step comprises a first sub-step of comparing the difference (ΔT) of the values of said temperatures (T1, T2) with a maximum temperature difference value (ΔTₘₐₓ) and with a minimum temperature difference value (ΔTₘᵢₙ) predetermined and memorized in a memory (25) of an electronic control unit (15) connected to said pumping means (13), and **in that** said third step also comprises a second sub-step of comparing an actual average value (Tc) of the values of said temperatures (T1, T2) with a first predetermined value (P1) at which to start up the pumping means (13) and with a second predetermined value (P2) indicative of the temperature of the interchange wall (19a) of a heat exchanger (19) of said boiler (11), both memorized in said memory (25).

7. Method as in claim 6, **characterized in that** if it proves from said comparisons that said actual average value (Tc) is greater than said second predetermined value (P2) and at the same time said difference (ΔT) between said two temperatures (T1, T2) is lower than said minimum temperature difference value (ΔTₘᵢₙ), then said pumping means (13) are made to function so that their flow rate is equal to a minimum value (Qₘᵢₙ).

8. Method as in claim 7, **characterized in that** if it proves from said comparisons that said actual average value (Tc) is greater than said second predetermined value (P2) and at the same time said difference (ΔT) between said two temperatures (T1, T2) is greater than said maximum temperature difference value (ΔTₘₐₓ), then said pumping means (13) are made to function so that their flow rate is equal to a maximum value (Qₘₐₓ).

9. Method as in claim 8, **characterized in that** if it proves from said comparison that said actual average value (Tc) is greater than said second predetermined value (P2) and at the same time said difference (ΔT) between said two temperatures (T1, T2) is comprised between said minimum temperature difference value (ΔTₘᵢₙ) and said maximum temperature difference value (ΔTₘₐₓ), then said pumping means (13) are made to function so that their flow rate varies proportionally between said minimum value (Qₘᵢₙ) and said maximum value (Qₘₐₓ).

10. Method as in claim 8 or 9, **characterized in that** if it proves from said comparisons that said actual average value (Tc) is less than said second predetermined value (P2) and at the same time greater than said first predetermined value (P1), then said pumping means (13) are made to function so that their flow rate varies proportionally between said minimum value (Qₘᵢₙ) and said maximum value (Qₘₐₓ).

11. Method as in any claim from 7 to 10, **characterized in that** if it proves from said comparisons that said actual average value (Tc) is less than both said first and said second predetermined values (P1, P2), then said pumping means (13) are made to function so that their flow rate is equal to a minimum value (Qₘᵢₙ).

12. Method as in claim 6, **characterized in that** said third step comprises a third sub-step of comparing the value of said first temperature (T1) with a third predetermined temperature value (Tw), memorized in a memory (25) of an electronic control unit (15).

13. Method as in claims 9 and 12, **characterized in that** if it proves from the comparisons that take place in said second and third sub-steps that said actual average value (Tc) is greater than said second predetermined value (P2) and at the same time said temperature value (T1) is different from said third predetermined value (Tw), then said pumping means (13) are made to function so that their flow rate varies proportionally between said minimum value (Qₘᵢₙ) and said maximum value (Qₘₐₓ).

14. Method as in any claim from 6 to 13, **characterized in that**, in said third step, said electronic control unit (15) adjusts the thermal power of said boiler (11) acting on feed means (23, 24) of a solid fuel toward a combustion chamber (22) of said boiler (11).

15. Method as in any of claims 9, 10 or 13, **characterized in that**, in said third step, adjustment means (15, 21) vary the flow rate of said pumping means (13), in a linear manner between said minimum value (Qₘᵢₙ) and said maximum value (Qₘₐₓ).

## Patentansprüche

1. Vorrichtung zum Optimieren des Arbeitens eines Boilers (11), der geeignet ist, um Wasser für eine Verbrauchermaschine (12) zu beheizen, und der aufweist ein Zuführrohr (17), ein Rückführrohr (18) und einen Wärmetauscher (19) mit einer Wärmeaustauschwand (19a) zwischen dem zu beheizenden Wasser und den Verbrennungsgasen, wobei die Vorrichtung aufweist ein Pumpenmittel (13), das geeignet ist, um das Wasser im Boiler (11) zu zirkulieren zwischen dem Rückführrohr (18) und dem Zuführrohr (17), wenigstens einen ersten Temperatursensor (16a) zum Erfassen einer ersten Temperatur (T1) des Wassers in dem Zuführrohr (17), einen zweiten Temperatursensor (16b), der mit dem ersten Rückführrohr (18) zusammenhängt zum Erfassen einer zweiten Temperatur (T2) des Wassers in dem Rückführrohr (18) und Einstellmittel (15, 21), die mit dem Pumpenmittel (13) zusammenhängen, um selektiv die Flussrate des Pumpenmittels (13) zu variieren in Abhängigkeit von der Temperatur, die von wenigstens einem von entweder dem ersten Temperatursensor (16a) oder dem zweiten Temperatursensor (16b) erfasst wird, **dadurch gekennzeichnet, dass** die Einstellmittel aufweisen eine elektronische Steuereinheit (15), die mit einem Speicher (25) versehen ist und die mit wenigstens dem ersten Temperatursensor (16a) und dem zweiten Temperatursensor (16b) zusammenhängt, und Leistungs-Variier-Mittel (21), um die Flussraten des Pumpenmittels (13) selektiv zu variieren in Abhängigkeit von wenigstens der ersten und der zweiten Temperatur (T1, T2), die von wenigstens dem ersten Temperatursensor (16a) und dem zweiten Temperatursensor (16b) erfasst wurden, wobei die elektronische Steuereinheit (15) eingerichtet ist, um die Differenz (ΔT) der Werte der ersten und der zweiten Temperatur (T1, T2) mit einem Maximum-Temperaturdifferenzwert (ΔTₘₐₓ) und mit einem Minimum-Temperaturdifferenzwert (ΔTₘᵢₙ) zu vergleichen, die vorherbestimmt und im Speicher (25) der elektronischen Steuereinheit (15) gespeichert sind, und auch um einen Vergleich eines aktuellen Durchschnittswerts (Tc) der Werte der ersten und der zweiten Temperatur (T1, T2) mit einem ersten vorherbestimmten Wert (P1), bei welchem die Pumpenmittel (13) zu starten sind, und mit einem zweiten vorherbestimmten Wert(P2) durchzuführen, der anzeigend ist für die Temperatur der Austauschwand (19a) des Wärmetauschers (19) des Boilers (11), welche beide im Speicher (25) gespeichert sind.

2. Vorrichtung gemäß Anspruch 1, **dadurch gekennzeichnet, dass** sie auch einen dritten Temperatursensor (16c) aufweist, der mit der Verbrauchermaschine (12) zusammenhängt.

3. Vorrichtung gemäß Anspruch 2, **dadurch gekennzeichnet, dass** die elektronische Steuereinheit (15) auch mit dem dritten Temperatursensor (16c) zusammenhängt, um die Flussraten der Pumpenmittel (13) selektiv zu variieren in Abhängigkeit von wenigstens zwei Temperaturen, die von wenigstens zwei von entweder dem ersten, dem zweiten oder dem dritten Temperatursensor (16a, 16b, 16c) detektiert wurden.

4. Vorrichtung gemäß irgendeinem vorhergehenden Anspruch, **dadurch gekennzeichnet, dass** das Pumpenmittel (13) an der Rückführleitung (18) positioniert ist vor dem zweiten Temperatursensor (16) gemäß der Flussrichtung des Wassers.

5. Vorrichtung gemäß Anspruch 3, **dadurch gekennzeichnet, dass** die elektronische Steuereinheit (15) auch geeignet ist, um Zuführmittel (23, 24) zu steuern, die geeignet sind, um selektiv einen Festbrennstoff zu einer Verbrennungskammer (22) des Boilers (11) zuzuführen, um die thermische Leistung des Boilers (11) einzustellen.

6. Verfahren zum Optimieren des Arbeitens eines Boilers (11), der geeignet ist, um Wasser für eine Verbrauchermaschine (12) zu beheizen und der aufweist ein Zuführrohr (17) und ein Rückführrohr (18), aufweisend einen ersten Schritt, bei welchem eine erste Temperatur (T1) des Wassers im Zuführrohr (17) gemessen wird, aufweisend einen zweiten Schritt, bei welchem eine zweite Temperatur (T2) des Wassers im Rückführrohr (18) gemessen wird, und einen dritten Schritt des Einstellens der Flussrate von Pumpenmitteln (13), die geeignet sind, um Wasser im Boiler (11) zu zirkulieren zwischen dem Rückführrohr (18) und dem Zuführrohr (17) in Abhängigkeit von wenigstens einer von den beiden Temperaturen (T1, T2), die im ersten und im zweiten Schritt gemessen wurden, **dadurch gekennzeichnet, dass** der dritte Schritt aufweist einen ersten Unterschritt des Vergleichens der Differenz (ΔT) der Werte der Temperaturen (T1, T2) mit einem Maximum-Temperaturdifferenzwert (ΔTₘₐₓ) und mit einem Minimum-Temperaturdifferenzwert (ΔTₘᵢₙ), die vorherbestimmt und in einem Speicher (25) einer elektronischen Steuereinheit (15) gespeichert sind, die mit den Pumpenmitteln (13) verbunden ist, und dadurch, dass der dritte Schritt auch aufweist einen zweiten Unterschritt des Vergleichens eines aktuellen Durchschnittswerts (Tc) der Werte der Temperaturen (T1, T2) mit einem ersten vorherbestimmten Wert (P1), bei welchem die Pumpenmittel (13) zu starten sind, und mit einem zweiten vorherbestimmten Wert (P2), der anzeigend ist für eine Temperatur der Austauschwand (19a) eines Wärmetauschers (19) des Boilers (11), welche beide in dem Speicher (25) gespeichert sind.

7. Verfahren gemäß Anspruch 6, **dadurch gekennzeichnet, dass**, falls es sich aus den Vergleichen herausstellt, dass der aktuelle Durchschnittswert (Tc) größer ist als der zweite vorherbestimmte Wert (P2) und zur gleichen Zeit die Differenz (ΔT) zwischen den beiden Temperaturen (T1, T2) kleiner ist als der Minimum-Temperaturdifferenzwert (ΔTₘᵢₙ), dann die Pumpenmittel (13) derart zum Arbeiten gebracht werden, dass ihre Flussrate gleich einem Minimumwert (Qₘᵢₙ) ist.

8. Verfahren gemäß Anspruch 7, **dadurch gekennzeichnet, dass**, falls es sich aus den Vergleichen herausstellt, dass der aktuelle Durchschnittswert (Tc) größer ist als der zweite vorherbestimmte Wert (P2) und zur gleichen Zeit die Differenz (ΔT) zwischen den beiden Temperaturen (T1, T2) größer ist als der Maximum-Temperaturdifferenzwert (ΔTₘₐₓ), dann die Pumpenmittel (13) derart zum Arbeiten gebracht werden, dass ihre Flussrate gleich einen Maximumwert (Qₘₐₓ) ist.

9. Verfahren gemäß Anspruch 8, **dadurch gekennzeichnet, dass**, falls es sich aus dem Vergleich herausstellt, dass der aktuelle Durchschnittswert (Tc) größer ist als der zweite vorherbestimmte Wert (P2) und zur gleichen Zeit die Differenz (ΔT) zwischen den beiden Temperaturen (T1, T2) zwischen dem Minimum-Temperaturdifferenzwert (ΔTₘᵢₙ) und dem Maximum-Temperaturdifferenzwert (ΔTₘₐₓ) liegt, dann die Pumpenmittel (13) derart zum Arbeiten gebracht werden, dass ihre Flussrate proportional variiert zwischen dem Minimumwert (Qₘᵢₙ) und dem Maximumwert (Qₘₐₓ).

10. Verfahren gemäß Anspruch 8 oder 9, **dadurch gekennzeichnet, dass**, falls es sich aus den Vergleichen herausstellt, dass der aktuelle Durchschnittswert (Tc) kleiner ist als der zweite vorherbestimmte Wert (P2) und zur gleichen Zeit größer ist als der erste vorherbestimmte Wert (P1), dann die Pumpenmittel (13) derart zum Arbeiten gebracht werden, dass ihre Flussrate proportional variiert zwischen dem Minimumwert (Qₘᵢₙ) und dem Maximumwert (Qₘₐₓ) .

11. Verfahren gemäß irgendeinem der Ansprüche 7 bis 10, **dadurch gekennzeichnet, dass**, falls es sich aus den Vergleichen herausstellt, dass der aktuelle Durchschnittswert (Tc) kleiner ist als sowohl der erste als auch der zweite vorherbestimmte Wert (P1, P2), dann die Pumpenmittel (13) derart zum Arbeiten gebracht werden, dass ihre Flussrate gleich einem Minimumwert (Qₘᵢₙ) ist.

12. Verfahren gemäß Anspruch 6, **dadurch gekennzeichnet, dass** der dritte Schritt aufweist einen dritten Unterschritt des Vergleichens des Werts der ersten Temperatur (T1) mit einem dritten vorherbestimmten Wert (Tw), der in einem Speicher (25) einer elektronischen Steuereinheit (15) gespeichert ist.

13. Verfahren gemäß Ansprüchen 9 und 12, **dadurch gekennzeichnet, dass**, falls es sich aus den Vergleichen, die im zweiten und dritten Unterschritt erfolgen, herausstellt, dass der aktuelle Durchschnittswert (Tc) größer ist als der zweite vorherbestimmte Wert (P2) und zur gleichen Zeit der Temperaturwert (T1) verschieden ist von dem dritten vorherbestimmten Wert (Tw), dann die Pumpenmittel (13) derart zum Arbeiten gebracht werden, dass ihre Flussrate proportional zwischen dem Minimumwert (Qₘᵢₙ) und dem Maximumwert (Qₘₐₓ) variiert.

14. Verfahren gemäß irgendeinem Anspruch von 6 bis 13, **dadurch gekennzeichnet, dass** im dritten Schritt die elektronische Steuereinheit (15) die thermische Leistung des Boilers (11) einstellt durch Einwirken auf Zuführmittel (23, 24) eines Festbrennstoffs zu einer Verbrennungskammer (22) des Boilers (11) hin.

15. Verfahren gemäß irgendeinem der Ansprüche 9, 10 oder 13, **dadurch gekennzeichnet, dass** im dritten Schritt die Einstellmittel (15, 21) die Flussrate der Pumpenmittel (13) variieren in linearer Weise zwischen dem Minimumwert (Qₘᵢₙ) und dem Maximumwert (Qₘₐₓ).

## Revendications

1. Appareil pour optimiser le fonctionnement d'une chaudière (11) adapté pour chauffer l'eau pour une machine d'un utilisateur (12) et ayant un tuyau d'alimentation (17), un tuyau de retour (18), et un échangeur de chaleur (19) comprenant une paroi d'échange de chaleur (19a) entre l'eau destinée à être chauffée et les vapeurs de combustion, dans lequel ledit appareil comprend des moyens de pompage (13) adaptés pour faire circuler ladite eau dans ladite chaudière (11), entre ledit tuyau de retour (18) et ledit tuyau d'alimentation (17), au moins un premier capteur de température (16a) pour détecter une première température (T1) de l'eau dans ledit tuyau d'alimentation (17), un deuxième capteur de température (16b) associé audit tuyau de retour (18) pour détecter une deuxième température (T2) de l'eau dans ledit tuyau de retour (18) et des moyens de réglage (15, 21) associés auxdits moyens de pompage (13), pour faire varier de manière sélective le débit d'écoulement desdits moyens de pompage (13) en fonction de la température détectée par au moins l'un ou l'autre parmi ledit premier capteur de température (16a) ou ledit deuxième capteur de température (16b), **caractérisé en ce que** lesdits moyens de réglage comprennent une unité de commande électronique (15) pourvue d'une mémoire (25) et associée au moins audit premier capteur de température (16a) et audit deuxième capteur de température (16b) et des moyens de variation de puissance (21) afin de faire varier de manière sélective le débit d'écoulement desdits moyens de pompage (13) en fonction au moins desdites première et deuxième températures (T1, T2), détectées par au moins ledit premier capteur de température (16a) et ledit deuxième capteur de température (16b), ladite unité de commande électronique (15) étant configurée pour comparer la différence (ΔT) des valeurs desdites première et deuxième températures (T1, T2) avec une valeur de différence de température maximale (ΔTₘₐₓ) et avec une valeur de différence de température minimale (ΔTₘᵢₙ) prédéterminées et mémorisées dans ladite mémoire (25) de ladite unité de commande électronique (15), et pour réaliser également ne comparaison d'une valeur moyenne réelle (Tc) des valeurs desdites première et deuxième températures (T1, T2) avec une première valeur prédéterminée (P1) à laquelle il faut démarrer les moyens de pompage (13) et avec une deuxième valeur prédéterminée (P2) indiquant la température de la paroi d'échange (19a) dudit échangeur de chaleur (19) de la chaudière (11), toutes deux mémorisées dans ladite mémoire (25).

2. Appareil selon la revendication 1, **caractérisé en ce qu'**il comprend en outre un troisième capteur de température (16c) associé à ladite machine d'un utilisateur (12).

3. Appareil selon la revendication 2, **caractérisé en ce que** ladite unité de commande électronique (15) est également associée audit troisième capteur de température (16c) afin de faire varier de manière sélective les débits d'écoulement desdits moyens de pompage (13) en fonction d'au moins deux températures détectées par au moins deux capteurs parmi l'un ou l'autre desdits premier, deuxième ou troisième capteurs de température (16a, 16b, 16c).

4. Appareil selon l'une quelconque des revendications précédentes, **caractérisé en ce que** lesdits moyens de pompage (13) sont positionnés sur ledit tuyau de retour (18), avant ledit deuxième capteur de température (16) en fonction du sens d'écoulement de l'eau.

5. Appareil selon la revendication 3, **caractérisé en ce que** ladite unité de commande électronique (15) est également adaptée pour commander des moyens d'alimentation (23, 24) adaptés pour fournir de façon sélective un combustible solide à destination d'une chambre de combustion (22) de ladite chaudière (11) afin d'ajuster la puissance thermique de ladite chaudière (11).

6. Procédé pour optimiser le fonctionnement d'une chaudière (11) adaptée pour chauffer l'eau pour une machine d'un utilisateur (12) et ayant un tuyau d'alimentation (17) et un tuyau de retour (18), comprenant une première étape dans laquelle une première température (T1) de l'eau dans ledit tuyau d'alimentation (17) est mesurée, comprenant une deuxième étape dans laquelle une deuxième température (T2) de l'eau dans ledit tuyau de retour (18) est mesurée, et une troisième étape consistant à ajuster le débit d'écoulement des moyens de pompage (13) adaptés pour faire circuler ladite eau dans ladite chaudière (11), entre ledit tuyau de retour (18) et ledit tuyau d'alimentation (17), en fonction d'au moins l'une desdites deux températures (T1, T2) mesurées dans ladite première et ladite deuxième étape, **caractérisé en ce que** ladite troisième étape comprend une première sous-étape consistant à comparer la différence (ΔT) des valeurs desdites températures (T1, T2) avec une valeur de différence de température maximale (ΔTₘₐₓ) et avec une valeur de différence de température minimale (ΔTₘᵢₙ) prédéterminées et mémorisées dans une mémoire (25) d'une unité de commande électronique (15) reliée auxdits moyens (13) de pompage, et **en ce que** ladite troisième étape comprend en outre une deuxième sous-étape consistant à comparer une valeur moyenne réelle (Tc) des valeurs desdites températures (T1, T2) avec une première valeur prédéterminée (P1) à laquelle il faut démarrer les moyens de pompage (13) et avec une deuxième valeur prédéterminée (P2) indiquant la température de la paroi d'échange (19a) d'un échangeur de chaleur (19) de ladite chaudière (11), toutes deux mémorisées dans ladite mémoire (25).

7. Procédé selon la revendication 6, **caractérisé en ce que** s'il s'avère à partir de ladite comparaison que ladite valeur moyenne réelle (Tc) est supérieure à ladite deuxième valeur prédéterminée (P2) et qu'en même temps ladite différence (ΔT) entre lesdites deux températures (T1, T2) est inférieure à ladite valeur de différence de température minimale (ΔTₘᵢₙ), alors lesdits moyens de pompage (13) sont mis en fonctionnement de telle sorte que leur débit d'écoulement est égal à une valeur minimale (Qₘᵢₙ).

8. Procédé selon la revendication 7, **caractérisé en ce que** s'il s'avère à partir de ladite comparaison que ladite valeur moyenne réelle (Tc) est supérieure à ladite deuxième valeur prédéterminée (P2) et qu'en même temps ladite différence (ΔT) entre lesdites deux températures (T1, T2) est supérieure à ladite valeur de différence de température maximale (ΔTₘₐₓ), alors lesdits moyens de pompage (13) sont mis en fonctionnement de telle sorte que leur débit d'écoulement est égal à une valeur maximale (Qₘₐₓ).

9. Procédé selon la revendication 8, **caractérisé en ce que** s'il s'avère à partir de ladite comparaison que ladite valeur moyenne réelle (Tc) est supérieure à ladite deuxième valeur prédéterminée (P2) et qu'en même temps ladite différence (ΔT) entre lesdites deux températures (T1, T2) est comprise entre ladite valeur de différence de température minimale (ΔTₘᵢₙ) et ladite valeur de différence de température maximale (ΔTₘₐₓ), alors lesdits moyens de pompage (13) sont mis en fonctionnement de telle sorte que leur débit d'écoulement varie proportionnellement entre ladite valeur minimale (Qₘᵢₙ) et ladite valeur maximale (Qₘₐₓ).

10. Procédé selon la revendication 8 ou 9, **caractérisé en ce que** s'il s'avère à partir de ladite comparaison que ladite valeur moyenne réelle (Tc) est inférieure à ladite deuxième valeur prédéterminée (P2) et en même temps supérieure à ladite première valeur prédéterminée (P1), alors lesdits moyens de pompage (13) sont mis en fonctionnement de telle sorte que leur débit d'écoulement varie proportionnellement entre ladite valeur minimale (Qₘᵢₙ) et ladite valeur maximale (Qₘₐₓ).

11. Procédé selon l'une quelconque des revendications 7 à 10, **caractérisé en ce que** s'il s'avère à partir de ladite comparaison que ladite valeur moyenne réelle (Tc) est inférieure à la fois à ladite première et à ladite deuxième valeur prédéterminée (P1, P2), alors lesdits moyens de pompage (13) sont mis en fonctionnement de telle sorte que leur débit d'écoulement est égal à une valeur minimale (Qₘᵢₙ).

12. Procédé selon la revendication 6, **caractérisé en ce que** ladite troisième étape comprend une troisième sous-étape consistant à comparer la valeur de ladite première température (T1) avec une troisième valeur de température prédéterminée (Tw), mémorisée dans une mémoire (25) d'une unité de commande électronique (15).

13. Procédé selon les revendications 9 et 12, **caractérisé en ce que** s'il s'avère à partir des comparaisons qui ont lieu dans lesdites deuxième et troisième sous-étapes que ladite valeur moyenne réelle (Tc) est supérieure à ladite deuxième valeur prédéterminée (P2) et qu'en même temps ladite valeur de température (T1) est différente de ladite troisième valeur prédéterminée (Tw), alors lesdits moyens de pompage (13) sont mis en fonctionnement de telle sorte que leur débit d'écoulement varie proportionnellement entre ladite valeur minimale (Qₘᵢₙ) et ladite valeur maximale (Qₘₐₓ).

14. Procédé selon l'une quelconque des revendications 6 à 13, **caractérisé en ce que**, dans ladite troisième étape, ladite unité de commande électronique (15) règle la puissance thermique de ladite chaudière (11) en agissant sur des moyens d'alimentation (23, 24) d'un carburant solide à destination d'une chambre de combustion (22) de ladite chaudière (11).

15. Procédé selon l'une quelconque des revendications 9, 10 ou 13, **caractérisé en ce que**, dans ladite troisième étape, des moyens de réglage (15, 21) font varier le débit d'écoulement desdits moyens de pompage (13), d'une manière linéaire entre ladite valeur minimale (Qₘᵢₙ) et ladite valeur maximale (Qₘₐₓ).
